(19) Europäisches Patentamt
European Patent Office
Office européen des brevets

(11) **EP 4 718 331 A1**

(12) **EUROPEAN PATENT APPLICATION**

(43) Date of publication:
**01.04.2026 Bulletin 2026/14**

(21) Application number: **25196230.4**

(22) Date of filing: **15.08.2025**

(51) International Patent Classification (IPC):
***G06N 3/09*** (2023.01)     ***G06N 3/0442*** (2023.01)
***G06N 3/0464*** (2023.01)     ***G06N 3/096*** (2023.01)

(52) Cooperative Patent Classification (CPC):
**G06N 3/09; G06N 3/0442; G06N 3/0464;
G06N 3/096**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024 US 202418901432**

(71) Applicant: **Intuit Inc.
Mountain View, CA 94043 (US)**

(72) Inventors:
• **ARDAZI, Shai
Mountain View, 94043 (US)**
• **VETZLER, Matan
Mountain View, 94043 (US)**
• **AHARON, Kfir
Mountain View, 94043 (US)**
• **YAHIA, Osnat Haj
Mountain View, 94043 (US)**

(74) Representative: **D Young & Co LLP
3 Noble Street
London EC2V 7BQ (GB)**

(54) **CREATING ALIGNED MACHINE LEARNING MODELS THROUGH BOOTSTRAPPING WITH ATTENTION**

(57)     Aspects of the present disclosure provide techniques for resource-efficient machine learning model configuration. Embodiments include dividing a set of labeled training data into training data subsets. Embodiments include training a first machine learning model using a first training data subset of the training data subsets. Embodiments include training a second machine learning model that has a same architecture as the first machine learning model using a second training data subset of the training data subsets. Embodiments include creating an aligned weight matrix based on weights of the trained first machine learning model and the trained second machine learning model. Embodiments include configuring an aligned machine learning model that has the same architecture as the first machine learning model using the aligned weight matrix.

FIG. 1

**Description**

**INTRODUCTION**

Aspects of the present disclosure relate to techniques for creating an aligned machine learning model with improved resource-efficiency through training multiple machine learning models using subsets of a training data set and aligning parameters of the multiple trained machine learning models to produce an aligned set of parameters for configuring the aligned machine learning model.

**BACKGROUND**

Every year millions of people, businesses, and organizations around the world utilize software applications to assist with countless aspects of life. Some software applications utilize machine learning models, such as for automated content generation, automated support and/or chat functionality, and/or a variety of other purposes.

Training or fine tuning of a machine learning model such as a large language model (LLMs) generally requires significant amounts of training data and large amounts of computing resources and time. For example, using a large set of training data to train or fine tune a machine learning model generally takes many hours or even days, and utilizes large amounts of processing and memory resources. Fine tuning of models is often performed at regular intervals, such as daily, to ensure high levels of accuracy and relevancy. Frequently performing such resource-intensive training or fine tuning operations is costly in time and computing resources, and is often disruptive to other operations that would otherwise be performed using such computing resources.

Accordingly, the inventors have identified opportunities for innovation in relation to improving techniques for training machine learning models.

**SUMMARY**

Particular aspects are set out in the appended independent claims. Various optional embodiments are set out in the dependent claims.

Certain embodiments provide a method for resource-efficient machine learning model configuration. The method generally includes: dividing a set of labeled training data into training data subsets; training a first machine learning model using a first training data subset of the training data subsets; training a second machine learning model that has a same architecture as the first machine learning model using a second training data subset of the training data subsets; creating an aligned weight matrix based on weights of the trained first machine learning model and the trained second machine learning model; and configuring an aligned machine learning model that has the same architecture as the first machine learning model using the aligned weight matrix.

Other embodiments comprise systems configured to perform the method set forth above as well as computer-readable mediums comprising (e.g. storing and/or conveying) instructions for performing the method set forth above.

The following description and the related drawings set forth in detail certain illustrative features of one or more embodiments.

**BRIEF DESCRIPTION OF THE DRAWINGS**

The appended figures depict certain aspects of the one or more embodiments and are therefore not to be considered limiting of the scope of this disclosure.

FIG. 1 is a diagram illustrating example processes related to machine learning model configuration, according to certain embodiments.

FIG. 2 is a diagram depicting an example related to parameter alignment for resource-efficient machine learning model configuration, according to certain embodiments.

FIG. 3 is a diagram depicting an example of training a machine learning model, according to certain embodiments.

FIG. 4 depicts example operations related to resource-efficient machine learning model configuration, according to certain embodiments.

FIG. 5 depicts an example processing system for resource-efficient machine learning model configuration, according to certain embodiments.

To facilitate understanding, identical reference numerals have been used, where possible, to designate identical elements that are common to the drawings. It is contemplated that elements and features of one embodiment may be beneficially incorporated in other embodiments without further recitation.

**DETAILED DESCRIPTION**

Aspects of the present disclosure provide apparatuses, methods, processing systems, and computer-readable mediums for resource-efficient machine learning model configuration.

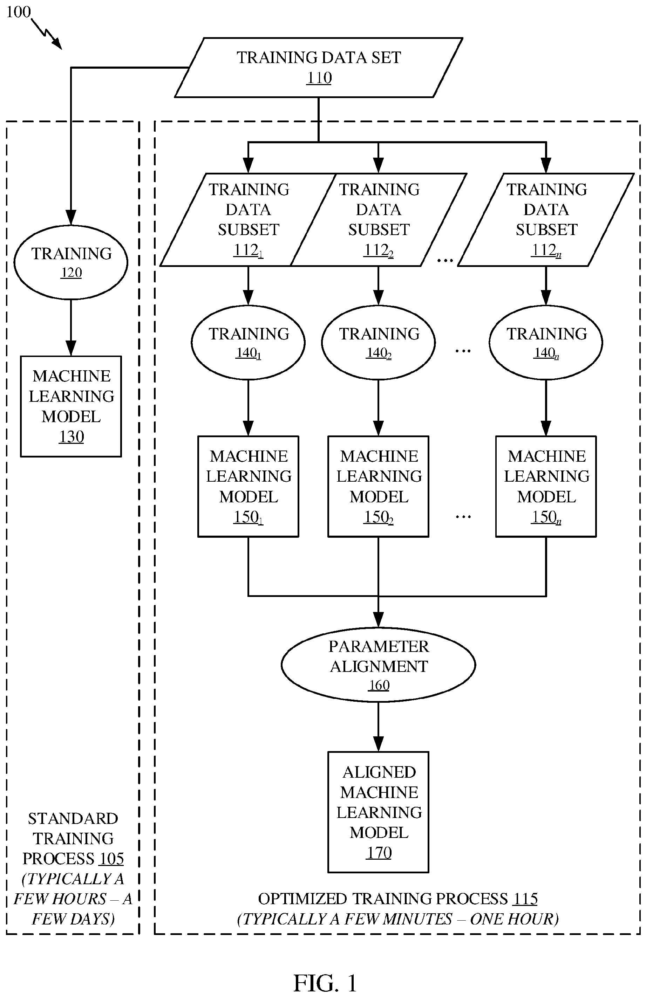

Training a machine learning model such as a language processing machine learning model, for example a large language model (LLM), generally requires a large amount of training data and large amounts of computing resources and time. Furthermore, the level of accuracy achieved by such a machine learning model is generally limited by the amount of resources available for training. Techniques described herein address the technical challenge of improving the resource-efficiency and accuracy of a machine learning model training process through the user of a multi-model alignment technique. As described in more detail below with respect to **FIG. 1,** a training data set may be divided into multiple smaller training data subsets, each of which may be used to train a separate machine learning model of a set of machine learning models with identical architectures. The training of these separate machine learning models using smaller training data subsets may be completed more quickly and with less computing resource utilization than would otherwise be required to train a single machine learning model using the entire training data set.

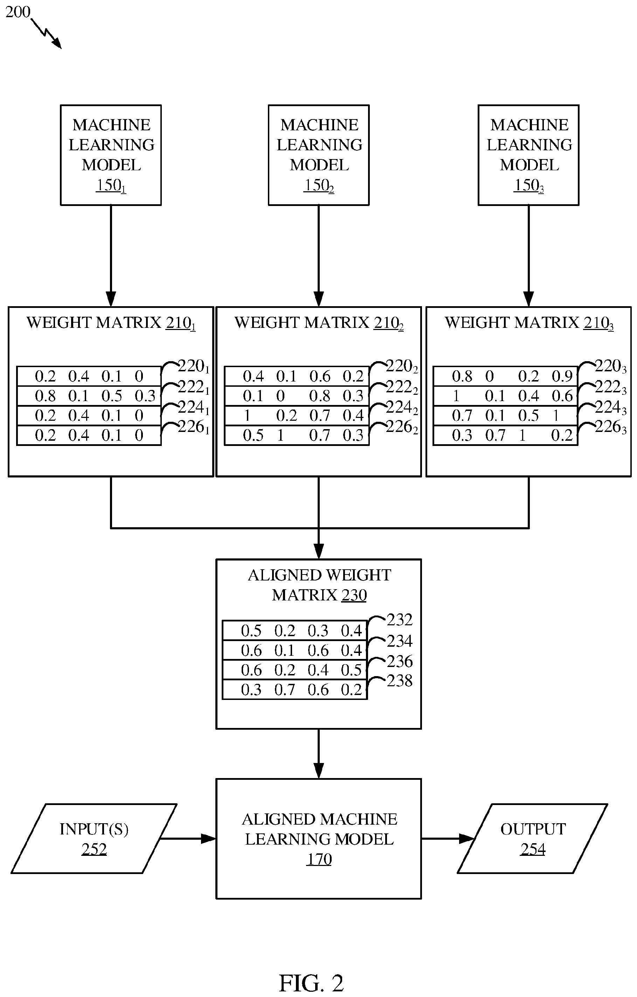

In some cases, the separate machine learning models may be trained in parallel, further improving the efficiency of the training process. Parameters of the separate machine learning models may then be aggregated or merged through a parameter alignment process to produce a single aligned set of parameters, which may then be used to configure a final aligned machine learning model. For example, as described in more detail below with respect to **FIG. 2,** weight matrices of the separate machine learning models may be aggregated, such as based on a normal distribution for weight vectors corresponding to each model layer, to produce a final "aligned" weight matrix. The aligned weight matrix may be used as the weights, such as the attention weights, for the aligned machine learning model. The aligned machine learning model may perform with similar or higher accuracy than would a machine learning model that was trained through a conventional process based on the entire set of training data, as the aligned weights represent combined knowledge gained from the entire training data set across the separate machine learning models. However, the aligned machine learning model may be created more quickly and with less computing resource utilization than would be involved in a conventional process due to the increased efficiency of training multiple models on smaller training data sets (e.g., in parallel) and aligning the parameters of the multiple models to produce final parameters for the aligned model.

Once configured using the aligned parameters, the aligned machine learning model may be used to produce outputs in connection with operations performed by a computing application. For example, a computing application may provide inputs to the aligned machine learning model and receive outputs from the aligned machine learning model for use in displaying content via a user interface, performing additional processing, storing data, populating variables, making automated determinations, and/or the like. In some cases, further training and/or fine tuning may be performed on the aligned machine learning model as appropriate, such as if an accuracy of the aligned machine learning model after it is configured is determined to be below a threshold or otherwise suboptimal (e.g., based on test data and/or user feedback with respect to results produced by the model).

Techniques described herein improve the technical field of training machine learning models such as LLMs in a number of ways. For instance, by utilizing smaller training data subsets of a larger training data set to train multiple separate models and aggregating parameters of the separate models to determine parameters for configuring an aligned machine learning model, techniques described herein improve the efficiency of model training while maintaining or improving accuracy of a resulting model. While conventional techniques involve training a single machine learning model through a resource-intensive training process based on a large training data set, embodiments of the present disclosure enable faster, more streamlined training processes of multiple models based on smaller training data sets, such as training such models in parallel with one another, while still resulting in a final model that reflects knowledge gained from the entire training data set. While conventional training processes generally take several hours or even days to complete, techniques described herein may take only a few minutes to an hour complete.

Embodiments of the present disclosure draw inspiration from the statistical technique of bootstrapping, which is typically employed to gauge the properties of a distribution. By utilizing a "bootstrapping" inspired technique that involves training multiple models using smaller subsets of a training data and determining a normal distribution of the parameters of those trained multiple models, techniques described herein enable a machine learning model to be efficiently configured based on such a normal distribution in order quickly arrive at an optimal set of parameters for a high level of model accuracy.

Experimental results indicate that, in addition to reducing the time and resource utilization involved in training, techniques described herein produce machine learning models that outperform machine learning models trained using conventional techniques in accuracy. In one particular experiment, test results indicated that a model trained using techniques described herein (e.g., training multiple models using training data subsets and aggregating the parameters of the multiple models to produce a final parameter set for the model) had an accuracy score of 0.81 (e.g., representing 81% accuracy across a test data set) while a model trained using conventional techniques on the same overall training data set had an accuracy score of 0.78 (e.g., representing 78% accuracy across a test data set).

It is noted that "training" as used herein may refer to initial training, re-training, and/or fine tuning of a machine learning model. Furthermore, while certain examples are described with respect to LLMs, techniques described herein may be used to efficiently train other types of machine learning models.

*Example Processes Related to Machine Learning Model Configuration*

**FIG. 1** is a diagram 100 illustrating example processes related to machine learning model configuration, according to certain embodiments.

In diagram 100, a training data set 110 may be used in a standard training process 105 and/or an optimized training process 115. Training data set 110 generally represents data that may be used to train or fine tune a machine learning model. In one example, training data set 110 includes a large number of training data instances, each training data instance including one or more inputs associated with a label (e.g., a ground truth label) indicating a known correct output associated with the one or more inputs.

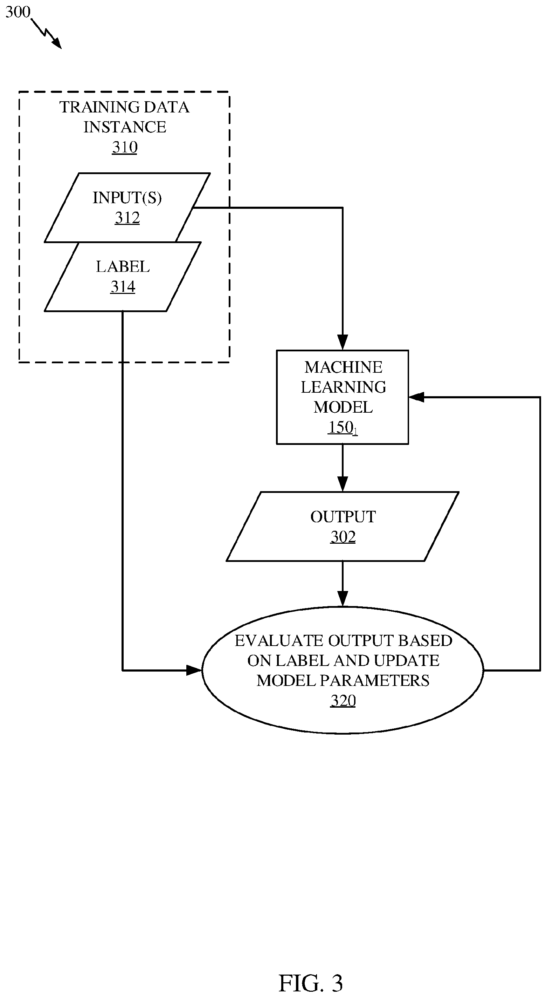

Standard training process 105 generally represents a conventional process for training a machine learning model. For example, in standard training process 105, training data set 110 is used during training 120 to train or fine tune machine learning model 130. Training 120 may involve a supervised learning process in which all of the training data instances in training data set 110 are used to train or fine tune machine learning model 130. For example, training 120 may involve iteratively adjusting tunable parameters (e.g., weights) of machine learning model 130 based on comparing outputs generated by machine learning model 140 in response to inputs from training data set 110 to labels in training data set 110. An example of a supervised learning process is described in more detail below with respect to **FIG. 3**.

Standard training process 105 is generally intensive in both computing resource utilization and time. In many cases standard training process 105 may take between a few hours and a few days to complete. Some techniques involve performing standard training process 105 at regular intervals, such as daily, to re-train or fine tune machine learning model 130 based on updated training data, leading to large expenditures of time and computing resources on a regular basis.

Optimized training process 115 generally represents an improved machine learning model training technique that overcomes the inefficiencies of standard training process 105 while maintaining or improving the accuracy of the resulting model. In optimized training process 115, training data set 110 is divided into a plurality of training data subsets $112_{1-n}$, which may also referred to individually as training data subset 112 and collectively as training data subsets 112. For example, a number of training data subsets 112 may correspond to a number of machine learning models $150_{1-n}$ and may be configurable and/or dynamically determined based on a size of training data set 110. In one embodiment, training data set 110 is divided into a number of subsets where each subset has a configured number of training data instances (or where each subset has the configured number or fewer than the configured number of training data instances), and the number of machine learning models 150 is determined based on the number of subsets. In some cases, one or more of the subsets may have fewer training data instances than the other subsets, such as if the number of training data instances in training data set 110 cannot be divided into equally sized subsets.

Machine learning models $150_{1-n}$, which may also be referred to individually as machine learning model 150 and collectively as machine learning models 150, generally represent multiple machine learning models having the same architecture. For example, each of machine learning models 150 may be an LLM or other type of machine learning model (e.g., in either case, all of machine learning models 150 may be of the same type) having a same number of parameters and layers and otherwise having the same architectural configuration as the other machine learning models 150. At training $140_{1-n}$, each of machine learning models $160_{1-n}$ is trained using the corresponding training data subset $112_{1-n}$. For example, training $140_1$ may involve training machine learning model $150_1$ using training data subset $112_1$, and so on. Each of training $140_{1-n}$ may involve a supervised learning process such as that described below with respect to FIG. 3, and/or otherwise may involve iteratively updating parameters (e.g., weights, such as attention weights) of a given machine learning model 150 based on a given training data subset 112. In one example, training $140_1$ may involve iteratively adjusting tunable parameters (e.g., weights) of machine learning model $150_1$ based on comparing outputs generated by machine learning model $150_1$ in response to inputs from training data set $140_1$ to labels in training data set $140_1$. Other instances of training 140 may be similar.

After training $140_{1-n}$ is complete (which may take between a few minutes and one hour to complete), parameters of machine learning models $150_{1-n}$ may be aggregated to produce aligned parameters. For example, at parameter alignment 160, the parameters (e.g., weights, such as attention weights) of machine learning models $150_{1-n}$ may be averaged (e.g., at each model layer). In some cases, parameter alignment 160 may involve sampling weights for each model layer according to a normal distribution (e.g., based on the average and standard deviation of the weight vectors for each model layer across machine learning models $150_{1-n}$) to produce an aligned weight matrix. Such a process may be referred to as cross mean attention, such as when the parameters that are aggregated in such a manner are attention weights (e.g., when the models are transformer models such as LLMs). An example of parameter alignment 160 is described in more detail below with respect to **FIG. 3**.

The aligned parameters determined through parameter alignment 160 may be used to configure an aligned machine learning model 170. For example, aligned machine learning model 170 may be a machine learning model of the same architecture as machine learning models 150, such as being of the same model type and having the same number of parameters and layers as machine learning models 150. In an example, the weights (e.g., attention weights) of aligned machine learning model 170 may be set to the aligned parameters (e.g., the aligned weight matrix) determined through parameter alignment 160. Performing parameter alignment 160 and configuring aligned machine learning model 170 according to the determined aligned parameters may take only a few seconds to complete. Thus, optimized training process 115 may take only between a few minutes and one hour to complete while producing an aligned machine learning model 170 that is configured according to parameters that reflect the combined knowledge gained by all of machine learning models 150 from all of training data subsets 112.

In one example, machine learning model 170 and machine learning models 150 are language processing machine learning models such as LLMs. Language processing machine learning models are generally neural networks, such as deep neural networks, that are trained using large amounts of natural language training data to generate natural language responses when provided with natural language queries (e.g., prompts). In some cases, language processing machine learning models are transformer models. For example, machine learning model 170 and machine learning models 150 may be generative pre-trained transformer (GPT) models or other types of language processing machine learning models that have been trained on a large set of training data (e.g., across a plurality of domains), and are capable as a result of such training to perform a wide variety of language-related tasks in response to natural language prompts.

In some embodiments, training 120 and training 140 represent fine tuning of machine learning models (that have previously been trained more generally) for one or more particular domains, such as for use with a particular software application, specific data sources, and/or for a specific purpose, while in other embodiments training 120 and training 140 represent initial training of machine learning models that have not been trained in advance of such training.

Once trained, machine learning model 170 may be deployed for use in generating outputs for use in connection with processing performed by a computing application. For example, aligned machine learning model 170 may be provided with one or more inputs such as a natural language prompt and associated context information, and may generate an output in response, such as a natural language response. Such an output may be displayed via a user interface and/or otherwise used in further processing, such as to populate a variable or document, to store data in memory, make an automated determination, and/or the like.

Optimized training process 115 may be repeated at regular intervals with updated training data, such as when new training data becomes available (e.g., based on user feedback with respect to outputs generated by aligned machine learning model 170 after it is configured based on parameter alignment 160). Thus, aligned machine learning model 170 may be regularly retrained or fine tuned in a resource-efficient manner over time based on user feedback for improved accuracy.

*Example Parameter Alignment*

**FIG. 2** is a diagram 200 depicting an example related to parameter alignment for resource-efficient machine learning model configuration, according to certain embodiments, according to certain embodiments. Diagram 200 includes three instances of machine learning models 150 of **FIG. 1** (including machine learning models $150_1$, $150_2$, and $150_3$) and aligned machine learning model 170 of **FIG. 1.** For example, aspects of diagram 200 may represent functionality performed at parameter alignment 160 of **FIG. 1.**

In diagram 200, weight matrices $210_1$, $210_2$, and $210_3$ of machine learning models $150_1$, $150_2$, and $150_3$ are used to create an aligned weight matrix 230 for configuring aligned machine learning model 170.

Each of weight matrices $210_1$, $210_2$, and $210_3$ represents parameters of a corresponding machine learning model 150, and includes vectors 220, 222, 224, and 226 that represent weights of particular model layers. For example, weight matrix $210_1$ includes vector $220_1$ (including the values 0.2, 0.4, 0.1, and 0) representing the weights of a first layer of machine learning model $150_1$, vector $222_1$ (including the values 0.8, 0.1, 0.5, and 0.3) representing the weights of a second layer of machine learning model $150_1$, vector $224_1$ (including the values 0.2, 0.4, 0.1, and 0) representing the weights of a third layer of machine learning model $150_1$, and vector $226_1$ (including the values 0.2, 0.4, 0.1, and 0) representing the weights of a fourth layer of machine learning model $150_1$. Weight matrices $210_2$, and $210_3$ similarly include vectors $220_2$ and $220_3$, vectors $222_2$ and $222_3$, vectors $224_2$ and $224_3$, and vectors $226_2$ and $226_3$, representing weights of corresponding model layers.

Creating aligned weight matrix 230 based on weight matrices $210_1$, $210_2$, and $210_3$ may involve sampling weights based on a normal distribution of the weight vectors corresponding to each layer across weight matrices weight matrices $210_1$, $210_2$, and $210_3$, such as by computing the average (mean) and standard deviation of such weight vectors. Generally, a point x from a normal distribution can be converted to the standard normal distribution z using the following formula:

$$z = (x\text{-mean}) \,/\, \text{standard deviation}.$$

For example, vector 232 (having values 0.5, 0.2, 0.3, and 0.4) of aligned weight matrix 230 may represent weights of a first layer of aligned machine learning model 170, and may be determined based on sampling from a normal distribution of vectors $220_1$, $220_2$, and $220_3$. Vector 234 (having values 0.6, 0.1, 0.6, and 0.4) of aligned weight matrix 230 may represent weights of a second layer of aligned machine learning model 170, and may be determined based on sampling from a normal distribution of vectors $222_1$, $222_2$, and $222_3$. Vector 236 (having values 0.6, 0.2, 0.4, and 0.5) of aligned weight matrix 230 may represent weights of a third layer of aligned machine learning model 170, and may be determined based on sampling from a normal distribution of vectors $224_1$, $224_2$, and $224_3$. Vector 238 (having values 0.3, 0.7, 0.6, and 0.2) of aligned weight matrix 230 may represent weights of a second layer of aligned machine learning model 170, and may be determined based on sampling from a normal distribution of vectors $226_1$, $226_2$, and $226_3$.

Weights of aligned machine learning model 170 may be set to aligned weight matrix 230. For example, if aligned machine learning model 170 is a transformer model such as an LLM, aligned weight matrix may be used as attention weights. While the matrices depicted in diagram 200 are 4x4 matrices for simplicity, weight matrices of machine learning models are generally much larger, and techniques described herein may be used with such larger weight matrices. Furthermore, while certain examples are described involving transformer models and attention weights, techniques described herein may be used to create different types of aligned machine learning models, such as other types of neural networks, long short-term memory (LSTM) models/layers, convolutional neural networks (CNNs), gated recurrent units (GRUs), tree-based models, and/or the like. Furthermore, techniques described herein with respect to determining aligned weight matrix 230 and/or parameter alignment 160 of FIG. 1 may also be used to determine other model parameters, such as coefficients, biases, centroids, and/or the like in a similar manner.

Once configured as described herein, aligned machine learning model 170 may be deployed for use by a software application. For example, a software application may provide one or more inputs 252 to aligned machine learning model 170, and aligned machine learning model 170 may generate an output 254 in response. Input(s) 252 may include text data (e.g., a natural language prompt and/or context information), numerical features (e.g., embeddings and/or other vectorized features), image or video data, audio data, and/or the like. Output 254 may include text data, structured object data, image or video content, audio content, and/or the like. Output 254 may be used in a variety of ways, such as to display content via a user interface (e.g., displaying output 254 itself and/or content identified or created based on output 254), populate a variable or document, store data in memory, make an automated determination, and/or the like.

In some cases, after being configured, aligned machine learning model 170 may be tested (e.g., using labeled test data) in order to determine an accuracy of machine learning model 170. If machine learning model 170 has an accuracy below a threshold and/or if machine learning model 170 is otherwise determined to be inaccurate (e.g., based on user feedback), machine learning model 170 may be further trained or fine-tuned, such as based on additional training data and/or at least a subset of training data 110 of **FIG. 1.** In some embodiments, the parameter alignment techniques described herein may be used as a "warm start" for a regular fine tuning process, and fine tuning may be performed after configuring the model with the aligned parameters to achieve a faster convergence. Techniques described herein, unlike existing techniques, obtain knowledge about the distribution of the desired parameters (e.g., attention weights), thereby decreasing the noise from various sources of data (due to the properties of the attention mechanism). By contrast, existing training or fine tuning techniques typically start without obtaining any prior knowledge on the distribution of the data set, and therefore take longer to converge.

*Example Training of a Machine Learning Model*

**FIG. 3** is a diagram 300 depicting an example of training or fine tuning a machine learning model, according to certain embodiments. Diagram 300 includes machine learning model $150_1$ of **FIGs. 1** and **2.** Training data instance 310 may represent an instance within training data set 110 of **FIG. 1.** Diagram 200 may represent model training operations similar to those performed at training 120 and/or any of training $140_{1-n}$ of **FIG. 1.**

Training data instance 310 includes one or more inputs 312 (e.g., which may include a natural language prompt, context information, and/or one or more other types of input data) and a label 314 (e.g., representing a known correct output corresponding to input(s) 312, such as based on manual review and/or user feedback).

In diagram 300, input(s) 312 from training data instance 310 are provided (e.g., as a prompt along with relevant context) to machine learning model $150_1$. Machine learning model $150_1$ may produce output 302 in response to input(s) 312. For example, output 302 may include a natural language response.

At block 320, output 302 is evaluated based on label 314, and one or more parameters of machine learning model $150_1$ are updated based on the evaluation. For example, output 302 may be compared to natural label 314, such as via evaluating a cost function, and one or more parameters of machine learning model $150_1$ may be adjusted based on the comparison. Such a process may be repeated iteratively (e.g., with machine learning model $150_1$ generating a new output based on its updated parameters on each iteration) until one or more conditions are met. In some embodiments, the conditions may relate to whether the outputs produced by the model based on the training inputs match the labels associated with the training inputs or whether a measure of error between training iterations is not decreasing or not decreasing more than a threshold amount. The conditions may also include whether a training iteration limit has been reached. Parameters of machine learning model $150_1$ adjusted during training may include, for example, hyperparameters, values related to numbers of iterations, weights, functions used by nodes to calculate scores, and/or the like. In some embodiments, validation and testing are also performed for machine learning model $150_1$, such as based on validation data and test data, as is known in the art.

*Example Operations for Resource-Efficient Machine Learning Model Configuration*

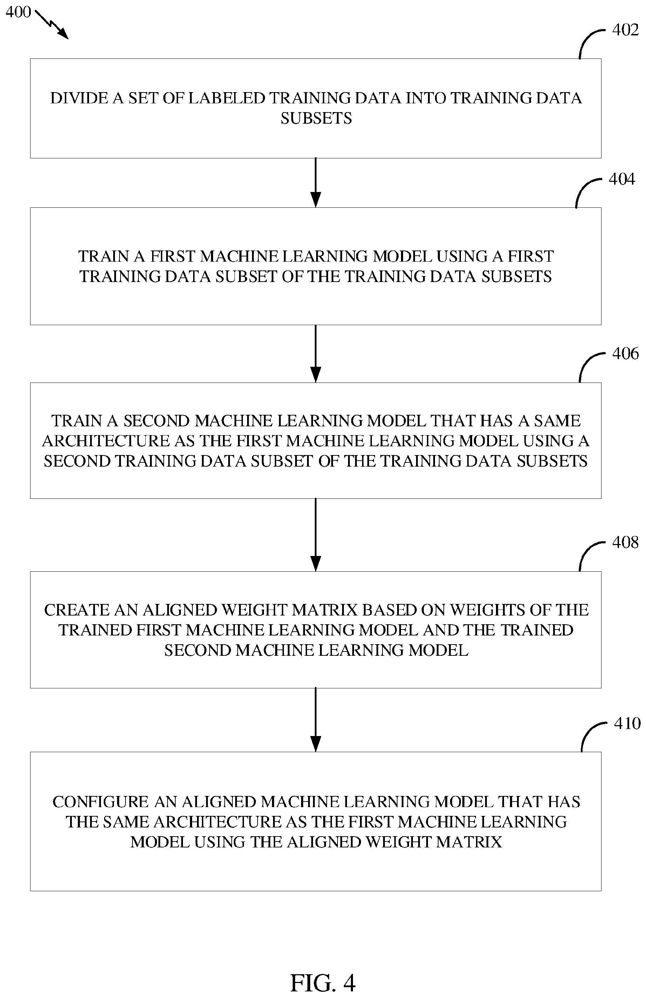

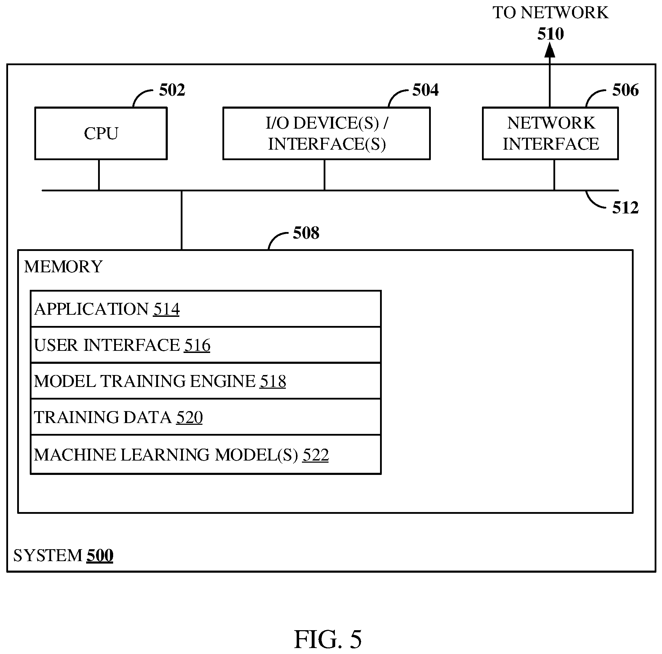

**FIG. 4** depicts example operations 400 for resource-efficient machine learning model configuration, according to certain embodiments. For example, operations 400 may be performed by one or more components described above with respect to **FIGs. 1-3,** system 500 of **FIG. 5** (described below), and/or one or more other components and/or devices. In one example, operations 400 are performed by model training engine 518 of **FIG. 5.**

Operations 400 begin at step 402, with dividing a set of labeled training data into training data subsets.

Operations 400 continue at step 404, with training a first machine learning model using a first training data subset of the training data subsets.

Operations 400 continue at step 406, with training a second machine learning model that has a same architecture as the first machine learning model using a second training data subset of the training data subsets.

Operations 400 continue at step 408, with creating an aligned weight matrix based on weights of the trained first machine learning model and the trained second machine learning model.

In some embodiments, the creating of the aligned weight matrix comprises computing average weight vectors for each layer across the first machine learning model and the second machine learning model. In certain embodiments, the creating of the aligned weight matrix further comprises computing a standard weight deviation for each layer across the first machine learning model and the second machine learning model. In some embodiments, the creating of the aligned weight matrix further comprises sampling values according to a normal distribution based on the average weight vectors and the standard weight deviation for each layer to produce the aligned weight matrix.

Operations 400 continue at step 410, with configuring an aligned machine learning model that has the same architecture as the first machine learning model using the aligned weight matrix.

In certain embodiments, the first machine learning model, the second machine learning model, and the aligned machine learning model are transformer models, and the configuring of the aligned machine learning model comprises setting attention weights of the aligned machine learning model based on the aligned weight matrix.

In some embodiments, the first machine learning model and the second machine learning model have been previously trained, and the training of the first machine learning model and the training of the second machine learning model comprise fine tuning processes.

Certain embodiments further comprise fine tuning the aligned machine learning model based on determining that an accuracy of the aligned machine learning model is below a threshold after the configuring.

In some embodiments, the aligned machine learning model is used by a computing application after the configuring to generate an output related to one or more actions performed by the computing application.

Notably, method 400 is just one example with a selection of example steps, but additional methods with more, fewer, and/or different steps are possible based on the disclosure herein.

*Example Computing System*

**FIG. 5** illustrates an example system 500 with which embodiments of the present disclosure may be implemented. For example, system 500 may be configured to perform one or more of operations 400 of **FIG. 4.**

System 500 includes a central processing unit (CPU) 502, one or more I/O device interfaces 504 that may allow for the connection of various I/O devices 504 (e.g., keyboards, displays, mouse devices, pen input, etc.) to the system 500A, network interface 506, a memory 508, and an interconnect 512. It is contemplated that one or more components of system 500 may be located remotely and accessed via a network 510. It is further contemplated that one or more components of system 500 may comprise physical components or virtualized components.

CPU 502 may retrieve and execute programming instructions stored in the memory 508. Similarly, the CPU 502 may retrieve and store application data residing in the memory 508. The interconnect 512 transmits programming instructions and application data, among the CPU 502, I/O device interface 504, network interface 506, and memory 508. CPU 502 is included to be representative of a single CPU, multiple CPUs, a single CPU having multiple processing cores, and other arrangements.

Additionally, the memory 508 is included to be representative of a random access memory or the like. In some embodiments, memory 508 may comprise a disk drive, solid state drive, or a collection of storage devices distributed across multiple storage systems. Although shown as a single unit, the memory 508 may be a combination of fixed and/or removable storage devices, such as fixed disc drives, removable memory cards or optical storage, network attached storage (NAS), or a storage area-network (SAN).

As shown, memory 508 includes an application 514, which may be a software application that utilizes one or more machine learning models described herein, such as machine learning model(s) 522, in connection with performing one or more actions (e.g., including displaying content via user interface 516). Memory 508 further includes user interface 516, which may be representative of a user interface through a user may provide input to and receive output from application 514, such as via one or more user interface screens displayed via a display device. For example, a user may interact with user interface 516 to submit natural language request, receive natural language responses (e.g., generated using a machine learning model 522), provide feedback with respect to natural language responses (and/or other data), and/or the like.

As shown, memory 508 further includes a model training engine 518, which may perform functionality described herein related to training, fine tuning, and/or configuring one or more machine learning models. For instance, model training engine 518 may perform standard training process 105 of **FIG. 1,** optimized training process 115 of **FIG. 1,** and/or operations 400 of **FIG. 4.**

Memory 508 further includes training data 520, which may include training data set 110 and//or training data subsets 112 of **FIG. 1** and/or training data instance 310 of **FIG. 3.** For example, model training engine 518 may use training data 520 to train a machine learning model 522.

Memory 508 further includes one or more machine learning models 522, which may include machine learning model 130, machine learning models 150, and/or machine learning model 170 of **FIG. 1.**

It is noted that system 500 is included as an example, and certain functionality described with respect to system 500 and/or otherwise described herein may be implemented via more or fewer devices and/or components.

*Additional Considerations*

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface.

Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

Therefore, from one perspective, there have been described techniques for resource-efficient machine learning model configuration. Embodiments include dividing a set of labeled training data into training data subsets. Embodiments include training a first machine learning model using a first training data subset of the training data subsets. Embodiments include training a second machine learning model that has a same architecture as the first machine learning model using a second training data subset of the training data subsets. Embodiments include creating an aligned weight matrix based on weights of the trained first machine learning model and the trained second machine learning model. Embodiments include configuring an aligned machine learning model that has the same architecture as the first machine learning model using the aligned weight matrix.

Further examples of feature combinations taught by the present disclosure are set out in the following numbered clauses.

Clause 1. A method of resource-efficient machine learning model configuration, comprising: dividing a set of labeled training data into training data subsets;

training a first machine learning model using a first training data subset of the training data subsets; training a second machine learning model that has a same architecture as the first machine learning model using a second training data subset of the training data subsets; creating an aligned weight matrix based on weights of the trained first machine learning model and the trained second machine learning model; and configuring an aligned machine learning model that has the same architecture as the first machine learning model using the aligned weight matrix.

Clause 2. The method of clause 1, wherein the creating of the aligned weight matrix comprises computing average weight vectors for each layer across the first machine learning model and the second machine learning model.

Clause 3. The method of clause 2, wherein the creating of the aligned weight matrix further comprises computing a standard weight deviation for each layer across the first machine learning model and the second machine learning model.

Clause 4. The method of clause 3, wherein the creating of the aligned weight matrix further comprises sampling values according to a normal distribution based on the average weight vectors and the standard weight deviation for each layer to produce the aligned weight matrix.

Clause 5. The method of any preceding clause, wherein the first machine learning model, the second machine learning model, and the aligned machine learning model are transformer models, and wherein the configuring of the aligned machine learning model comprises setting attention weights of the aligned machine learning model based on the aligned weight matrix.

Clause 6. The method of any preceding clause, wherein the first machine learning model and the second machine learning model have been previously trained, and wherein the training of the first machine learning model and the training of the second machine learning model comprise fine tuning processes.

Clause 7. The method of any preceding clause, further comprising fine tuning the aligned machine learning model based on determining that an accuracy of the aligned machine learning model is below a threshold after the configuring.

Clause 8. The method of any preceding clause, wherein the aligned machine learning model is used by a computing application after the configuring to generate an output related to one or more actions performed by the computing application.

Clause 9. A system for resource-efficient machine learning model configuration, comprising: one or more processors; and a memory comprising instructions that, when executed by the one or more processors, cause the system to: divide a set of labeled training data into training data subsets; train a first machine learning model using a first training data subset of the training data subsets; train a second machine learning model that has a same architecture as the first machine learning model using a second training data subset of the training data subsets; create an aligned weight matrix based on weights of the trained first machine learning model and the trained second machine learning model; and configure an aligned machine learning model that has the same architecture as the first machine learning model using the aligned weight matrix.

Clause 10. The system of clause 9, wherein the creating of the aligned weight matrix comprises computing average weight vectors for each layer across the first machine learning model and the second machine learning model.

Clause 11. The system of clause 10, wherein the creating of the aligned weight matrix further comprises computing a standard weight deviation for each layer across the first machine learning model and the second machine learning model.

Clause 12. The system of clause 11, wherein the creating of the aligned weight matrix further comprises sampling values according to a normal distribution based on the average weight vectors and the standard weight deviation for each layer to produce the aligned weight matrix.

Clause 13. The system of any of clause 9 to 12, wherein the first machine learning model, the second machine learning model, and the aligned machine learning model are transformer models, and wherein the configuring of the aligned machine learning model comprises setting attention weights of the aligned machine learning model based on the aligned weight matrix.

Clause 14. The system of any of clause 9 to 13, wherein the first machine learning model and the second machine learning model have been previously trained, and wherein the training of the first machine learning model and the training of the second machine learning model comprise fine tuning processes.

Clause 15. The system of any of clauses 9 to 14, wherein the instructions, when executed by the one or more processors, further cause the system to fine tune the aligned machine learning model based on determining that an accuracy of the aligned machine learning model is below a threshold after the configuring.

Clause 16. The system of any of clauses 9 to 15, wherein the aligned machine learning model is used by a computing application after the configuring to generate an output related to one or more actions performed by the computing application.

Clause 17. A computer readable medium comprising instructions that, when executed by one or more processors of a computing system, cause the computing system to: divide a set of labeled training data into training data subsets; train a first machine learning model using a first training data subset of the training data subsets; train a second machine learning model that has a same architecture as the first machine learning model using a second training data subset of the training data subsets; create an aligned weight matrix based on weights of the trained first machine learning model and the trained second machine learning model; and configure an aligned machine learning model that has the same architecture as the first machine learning model using the aligned weight matrix.

Clause 18. The computer readable medium of clause 17, wherein the creating of the aligned weight matrix comprises computing average weight vectors for each layer across the first machine learning model and the second machine learning model.

Clause 19. The computer readable medium of clause 18, wherein the creating of the aligned weight matrix further comprises computing a standard weight deviation for each layer across the first machine learning model and the second machine learning model.

Clause 20. The computer readable medium of clause 19, wherein the creating of the aligned weight matrix further comprises sampling values according to a normal distribution based on the average weight vectors and the standard weight deviation for each layer to produce the aligned weight matrix.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

**Claims**

1. A method of resource-efficient machine learning model configuration, comprising:

   dividing a set of labeled training data into training data subsets;
   training a first machine learning model using a first training data subset of the training data subsets;
   training a second machine learning model that has a same architecture as the first machine learning model using a second training data subset of the training data subsets;
   creating an aligned weight matrix based on weights of the trained first machine learning model and the trained second machine learning model; and
   configuring an aligned machine learning model that has the same architecture as the first machine learning model using the aligned weight matrix.

2. The method of Claim 1, wherein the creating of the aligned weight matrix comprises computing average weight vectors for each layer across the first machine learning model and the second machine learning model.

3. The method of Claim 2, wherein the creating of the aligned weight matrix further comprises computing a standard weight deviation for each layer across the first machine learning model and the second machine learning model.

4. The method of Claim 3, wherein the creating of the aligned weight matrix further comprises sampling values according to a normal distribution based on the average weight vectors and the standard weight deviation for each layer to produce the aligned weight matrix.

5. The method of any preceding Claim, wherein the first machine learning model, the second machine learning model, and the aligned machine learning model are transformer models, and wherein the configuring of the aligned machine learning model comprises setting attention weights of the aligned machine learning model based on the aligned weight matrix.

6. The method of any preceding Claim, wherein the first machine learning model and the second machine learning model have been previously trained, and wherein the training of the first machine learning model and the training of the second machine learning model comprise fine tuning processes.

7. The method of any preceding Claim, further comprising fine tuning the aligned machine learning model based on determining that an accuracy of the aligned machine learning model is below a threshold after the configuring.

8. The method of any preceding Claim, wherein the aligned machine learning model is used by a computing application after the configuring to generate an output related to one or more actions performed by the computing application.

9. A system for resource-efficient machine learning model configuration, comprising:

   one or more processors; and

a memory comprising instructions that, when executed by the one or more processors, cause the system to:

divide a set of labeled training data into training data subsets;
train a first machine learning model using a first training data subset of the training data subsets;
train a second machine learning model that has a same architecture as the first machine learning model using a second training data subset of the training data subsets;
create an aligned weight matrix based on weights of the trained first machine learning model and the trained second machine learning model; and
configure an aligned machine learning model that has the same architecture as the first machine learning model using the aligned weight matrix.

10. The system of Claim 9, further configured to perform functionality corresponding to the method of any of claims 2 to 8.

11. A computer readable medium comprising instructions that, when executed by one or more processors of a computing system, cause the computing system to:

divide a set of labeled training data into training data subsets;
train a first machine learning model using a first training data subset of the training data subsets;
train a second machine learning model that has a same architecture as the first machine learning model using a second training data subset of the training data subsets;
create an aligned weight matrix based on weights of the trained first machine learning model and the trained second machine learning model; and
configure an aligned machine learning model that has the same architecture as the first machine learning model using the aligned weight matrix.

12. The computer readable medium of Claim 11, wherein the instructions further cause the computing system to implement the method of any of claims 2 to 8.

100

TRAINING DATA SET
110

TRAINING
120

MACHINE
LEARNING
MODEL
130

TRAINING
DATA
SUBSET
$112_1$

TRAINING
DATA
SUBSET
$112_2$

...

TRAINING
DATA
SUBSET
$112_n$

TRAINING
$140_1$

TRAINING
$140_2$

...

TRAINING
$140_n$

MACHINE
LEARNING
MODEL
$150_1$

MACHINE
LEARNING
MODEL
$150_2$

...

MACHINE
LEARNING
MODEL
$150_n$

PARAMETER
ALIGNMENT
160

ALIGNED
MACHINE
LEARNING
MODEL
170

STANDARD
TRAINING
PROCESS 105
(TYPICALLY A
FEW HOURS – A
FEW DAYS)

OPTIMIZED TRAINING PROCESS 115
(TYPICALLY A FEW MINUTES – ONE HOUR)

FIG. 1

200

MACHINE
LEARNING
MODEL
$150_1$

MACHINE
LEARNING
MODEL
$150_2$

MACHINE
LEARNING
MODEL
$150_3$

WEIGHT MATRIX $210_1$

| | | | | |
|---|---|---|---|---|
| 0.2 | 0.4 | 0.1 | 0 | $220_1$ |
| 0.8 | 0.1 | 0.5 | 0.3 | $222_1$ |
| 0.2 | 0.4 | 0.1 | 0 | $224_1$ |
| 0.2 | 0.4 | 0.1 | 0 | $226_1$ |

WEIGHT MATRIX $210_2$

| | | | | |
|---|---|---|---|---|
| 0.4 | 0.1 | 0.6 | 0.2 | $220_2$ |
| 0.1 | 0 | 0.8 | 0.3 | $222_2$ |
| 1 | 0.2 | 0.7 | 0.4 | $224_2$ |
| 0.5 | 1 | 0.7 | 0.3 | $226_2$ |

WEIGHT MATRIX $210_3$

| | | | | |
|---|---|---|---|---|
| 0.8 | 0 | 0.2 | 0.9 | $220_3$ |
| 1 | 0.1 | 0.4 | 0.6 | $222_3$ |
| 0.7 | 0.1 | 0.5 | 1 | $224_3$ |
| 0.3 | 0.7 | 1 | 0.2 | $226_3$ |

ALIGNED WEIGHT
MATRIX 230

| | | | | |
|---|---|---|---|---|
| 0.5 | 0.2 | 0.3 | 0.4 | 232 |
| 0.6 | 0.1 | 0.6 | 0.4 | 234 |
| 0.6 | 0.2 | 0.4 | 0.5 | 236 |
| 0.3 | 0.7 | 0.6 | 0.2 | 238 |

INPUT(S)
252

ALIGNED MACHINE
LEARNING MODEL
170

OUTPUT
254

FIG. 2

300

TRAINING DATA
INSTANCE
310

INPUT(S)
312

LABEL
314

MACHINE
LEARNING
MODEL
150₁

OUTPUT
302

EVALUATE OUTPUT BASED
ON LABEL AND UPDATE
MODEL PARAMETERS
320

FIG. 3

400

402

DIVIDE A SET OF LABELED TRAINING DATA INTO TRAINING DATA SUBSETS

404

TRAIN A FIRST MACHINE LEARNING MODEL USING A FIRST TRAINING DATA SUBSET OF THE TRAINING DATA SUBSETS

406

TRAIN A SECOND MACHINE LEARNING MODEL THAT HAS A SAME ARCHITECTURE AS THE FIRST MACHINE LEARNING MODEL USING A SECOND TRAINING DATA SUBSET OF THE TRAINING DATA SUBSETS

408

CREATE AN ALIGNED WEIGHT MATRIX BASED ON WEIGHTS OF THE TRAINED FIRST MACHINE LEARNING MODEL AND THE TRAINED SECOND MACHINE LEARNING MODEL

410

CONFIGURE AN ALIGNED MACHINE LEARNING MODEL THAT HAS THE SAME ARCHITECTURE AS THE FIRST MACHINE LEARNING MODEL USING THE ALIGNED WEIGHT MATRIX

FIG. 4

TO NETWORK
**510**

CPU **502**

I/O DEVICE(S) / INTERFACE(S) **504**

NETWORK INTERFACE **506**

**512**

**508**

MEMORY

APPLICATION 514

USER INTERFACE 516

MODEL TRAINING ENGINE 518

TRAINING DATA 520

MACHINE LEARNING MODEL(S) 522

SYSTEM **500**

FIG. 5

# EUROPEAN SEARCH REPORT

**Application Number**

EP 25 19 6230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LESHEM CHOSHEN ET AL: "Fusing finetuned models for better pretraining", ARXIV.ORG, CORNELL UNIVERSITY LIBRARY, 201 OLIN LIBRARY CORNELL UNIVERSITY ITHACA, NY 14853, 6 April 2022 (2022-04-06), XP091201009, * page 1 - page 3 * * page 2; figure 1 * | 1-12 | INV. G06N3/09 G06N3/0442 G06N3/0464 G06N3/096 |
| X | H. Brendan Mcmahan ET AL: "Communication-Efficient Learning of Deep Networks from Decentralized Data", , 17 February 2016 (2016-02-17), XP055467287, Retrieved from the Internet: URL:https://arxiv.org/pdf/1602.05629v2.pdf * page 1 - page 5 * | 1-12 | |
| A | MITCHELL WORTSMAN ET AL: "Model soups: averaging weights of multiple fine-tuned models improves accuracy without increasing inference time", ARXIV.ORG, CORNELL UNIVERSITY LIBRARY, 201 OLIN LIBRARY CORNELL UNIVERSITY ITHACA, NY 14853, 10 March 2022 (2022-03-10), XP091179972, * page 1 - page 4 * | 1-12 | TECHNICAL FIELDS SEARCHED (IPC) G06N |
| A | MICHAEL MATENA ET AL: "Merging Models with Fisher-Weighted Averaging", ARXIV.ORG, CORNELL UNIVERSITY LIBRARY, 201 OLIN LIBRARY CORNELL UNIVERSITY ITHACA, NY 14853, 18 November 2021 (2021-11-18), XP091101944, * the whole document * | 1-12 | |

The present search report has been drawn up for all claims

| Place of search | Date of completion of the search | Examiner |
|---|---|---|
| The Hague | 19 January 2026 | Keresztury, Bence |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)